# EUROPEAN PATENT SPECIFICATION

(11) **EP 3 591 815 B1**
(45) Date of publication and mention of the grant of the patent: **19.06.2024**
(21) Application number: 19184812.6
(22) Date of filing: 05.07.2019
(51) Int. Cl.: H02K 5/22

(54) **ROTATING ELECTRIC MACHINE**
ELEKTRISCHE DREHMASCHINE
MACHINE ÉLECTRIQUE ROTATIVE

(30) Priority: 06.07.2018 US 201862694696 P
(43) Date of publication of application: 08.01.2020
(73) Proprietor: Weg Equipamentos Elétricos S.A., 89256-900 Jaraguá do Sul, SC (BR)
(72) Inventor: ADILSON PASSIG, Jhonatan, 89254800 JARAGUÁ DO SUL, SC (BR); LAFIN, Patrick, 89254800 JARAGUÁ DO SUL, SC (BR); SCHMIDT FERREIRA, Alexandre, 89254800 JARAGUÁ DO SUL, SC (BR); MARIN KIST, Leandro Felipe, 89254800 JARAGUÁ DO SUL, SC (BR)
(74) Representative: Cabinet Beaumont

(56) References cited:
- EP-A2- 2 988 399
- DE-A1- 4 209 823
- DE-A1-102007 022 070
- GB-A- 1 217 992
- US-A1- 2015 002 002

## Description

### FIELD OF THE INVENTION

The present invention relates to a rotating electric machine and, more specifically, to a rotating electric machine with a terminal box fastening system.

### BACKGROUND OF THE INVENTION

Several different types of electric machine shells are known in the art, which basically comprise a shell wherein the parts and components of the machines are enclosed.

As known to those skilled in the art, the housing is adapted to enclose a number of inner components, and, also, to receive a series of external accessories and components, which are fixed to the casing by means of different fastening systems.

An inconvenient associated with component fastening systems in electric machines is related to the terminal boxes which are connected to the shell for housing the electrical cable connections to the machine.

Typically, the design of the terminal box must be carefully designed to ensure correct fastening to the shell, an installation space suitable for the terminal board or terminal support and a suitable gasket between the box and the shell and between the lid and the box.

The terminal boxes known in the art comprise a frame with a lid, which is usually fixed to the machine shell by means of screws. The terminal board is placed inside the box and it is bolted to the frame or to the machine shell. Gaskets (elastomeric or polymeric) are used to ensure proper sealing between the frame of the box and the shell of the machine and between the frame of the box and the lid.

Therefore, the terminal box solutions known in the art present drawbacks related to the complexity of the fastening system and to the use of additional fastening and/or sealing components.

Document DE 10 2007 022070 discloses an electric motor having a first housing part having a protrusion and a second housing part fastened to the first housing part. The protrusion has a latching lug with engages a corresponding recess of the second housing part.

Document EP 2 988 399 discloses a fastening system for fastening a terminal box to the housing of an electrical machine. The fastening system allows the fitting between the lower part of the terminal box and a receiving portion of the housing and the fastening of the terminal box to the housing using a single screw.

Document US 2015/002002 discloses an electric motor with an electronics housing having a housing lower parte and a removable cover.

Document GB 1 217 992 discloses a casing for an electrical machine and a terminal box mounted on the casing by hooks and lugs which engage a pair of T-shaped grooves.

Document DE 42 09 823 discloses a motor comprising a housing with integrated plug elements which engage in corresponding elements of a coupling part.

### OBJECTS OF THE INVENTION

It is an object of the present invention to provide a rotating electric machine with an improved terminal box.

It is another object of the present invention to provide a rotating electric machine having a fastening system that allows attachment of the terminal box to the shell without the need for screws.

It is another objective of the present invention to provide a rotating electric machine having a fastening system that allows the attachment of the terminal box to the shell by means of quick coupling (snap-fit type).

### BRIEF DESCRIPTION OF THE INVENTION

The present invention refers to a rotating electric machine of the type comprising a shell housing an active core with a rotor and a stator, and a terminal box, wherein the shell having a receiving portion to receive a terminal box, wherein the terminal box receiving portion comprises an opening, and in its vicinity, two spaced walls of which the upper edges comprise snap-fit beveled shoulder. The terminal box, in turn, has an engaging portion with a perimetric wall and two spaced pendant tabs internal to the perimetric wall, the lower edges of which comprise snap-fit beveled shoulders. The attachment of the terminal box to the terminal box receiving portion is made by means of snap-fit between the snap-fit beveled shoulder of the spaced tabs of the fastening portion of the terminal box with the snap-fit beveled shoulder of the spaced walls of the terminal box receiving portion. The spaced walls are parallel lateral walls of the terminal box receiving portion, and the two spaced pendant tabs are parallel and inner to the laterals of the peripheric wall.

The terminal box receiving portion has an inclined base and the sides of the peripheric wall of the terminal box engaging portion are inclined, so that the profile of the perimetric wall complements the profile of the inclined base of the terminal box. The peripheric wall of the fastening portion of the terminal box comprises a stepped edge which cooperates with an edge of the inclined base of the terminal box receiving portion. The cooperation between the stepped edge of the peripheric wall and the edge of the inclined base generates a housing to accommodate a gasket joint.

The terminal box receiving portion may further comprise at least one grounding positioning cavity configured to receive a grounding screw, and the fastening portion of the terminal box comprises at least one eyelet disposed in a position corresponding to the ground positioning cavity.

In one embodiment of the invention, the terminal box receiving portion comprises three grounding positioning cavities, and the engaging portion of the body portion of the terminal box comprises three eyelets, each eyelet being arranged in a position corresponding to a respective ground positioning cavity.

The ground positioning cavities may be formed by wall portions formed in the terminal box receiving portion.

The inclined base of terminal box receiving portion may further comprise a recess, disposed adjacent to one of the spaced walls of the terminal box receiving portion. In one embodiment of the invention, the inclined base of the terminal box receiving portion comprises two recesses, each of the recesses being located adjacent to a respective one of spaced walls of the terminal box receiving portion.

### BRIEF DESCRIPTION OF THE DRAWINGS

The present invention will be described in more detail below, with references to the accompanying drawings, in which:
**Figure 1** - is a perspective view of an electric machine according to the present invention;
**Figure 2** - is a detailed view of the fastening between the rotating electric machine shell and the terminal box, wherein only the body part of the terminal box is shown;
**Figure 3** - is a perspective view of the shell part that has the terminal box receiving part;
**Figure 4** - is a bottom perspective view of the body part of the terminal box of the rotating electric machine according to the present invention;
**Figure 5** - is a cross sectional view of the fastening between the rotating electric machine shell and the terminal box; wherein only the body part of the terminal box is shown;
**Figure 6** - is another cross-sectional view of the fastening between the rotating electric machine shell and the terminal box; wherein only the body part of the terminal box is shown;
**Figure 7** - is an exploded perspective view of the terminal box attached to the rotating electric machine according to the present invention, only part of the shell being shown.
**Figure 8** - is an upper perspective view of the body part of the terminal box of the rotating electric machine according to the present invention;
**Figure 9** - is a second perspective view of the shell part that has the terminal box receiving part; and
**Figure 10** - is a second detailed view of the fastening between the rotating electric machine shell and the terminal box, wherein only the body part of the terminal box is shown.

### DETAILED DESCRIPTION OF THE INVENTION

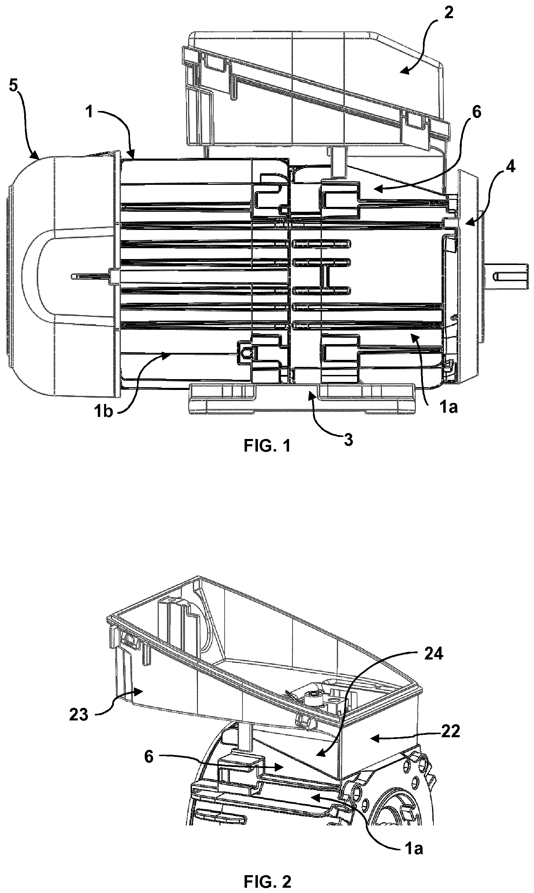

Figure 1 shows an electric machine incorporating one embodiment of the fastening solution of terminal box of the present invention.

Although the present invention is depicted incorporated in an electric motor, it should be understood that the solution of the invention could also be applied to other electrical machines comprising a housing, for example, any rotating electric machine having such characteristics.

As can be seen in Figure 1, the electric motor comprises a shell split in the axial direction 1, formed by a first shell part 1a and a second shell part 1b.

It should be pointed out, however, that the present invention could be embodied in electric machines with shells having different constructive characteristics, such as, for example, of the type comprising a one-piece main shell with end caps.

As known to those skilled in the art, the shell of a motor encloses a series of internal components and receives a series of external fittings and components, which are attached to the shell by different fastening systems. Thus, as external components, the electric motor of Figure 1 has a terminal box 2, a foot 3, a flange 4 and a deflector cap 5. The function of such components is known to those skilled in the art and will not be discussed in detail herein.

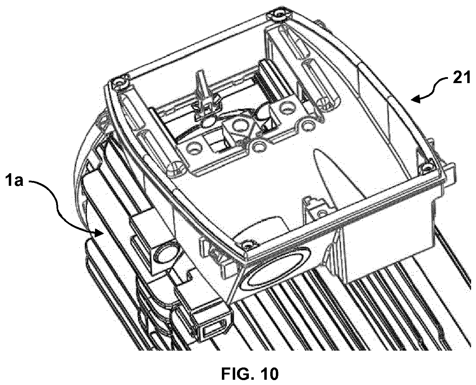

The present invention comprises a terminal box fastening system with an embodiment shown in Figures 1 to 10. In the system according to the present invention, the electric machine shell comprises a terminal box receiving portion 6 with an opening 7.

The terminal box receiving portion 6 has an inclined base 8.

The terminal box 2 has a body part 21, with an engaging portion 22, and a cover part 23.

Preferably, the engaging portion 22 of the body part 21 of the terminal box 2 has a perimetric wall 24 with inclined sides, so that the profile of the perimetric wall complements the profile of the inclined base of the terminal box 2.

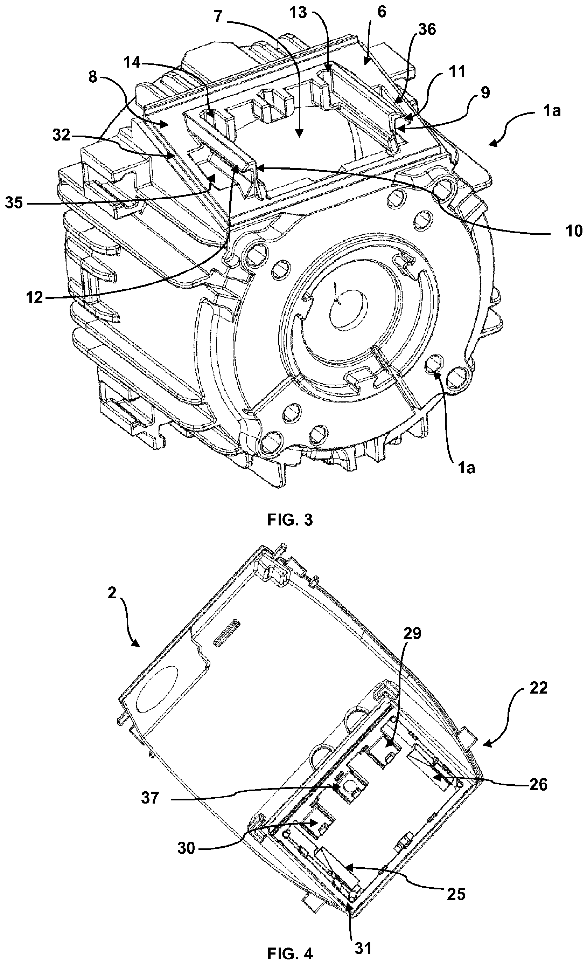

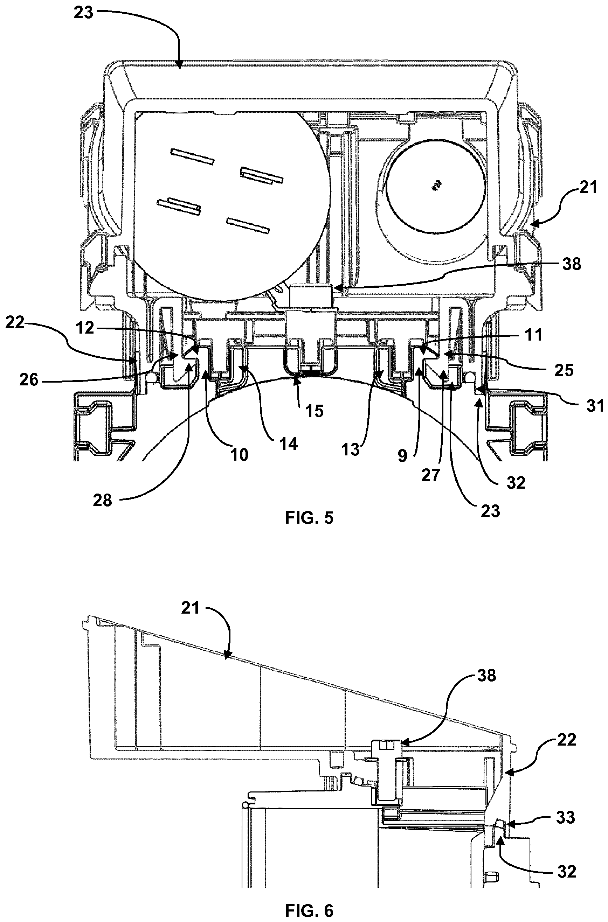

As best seen in Figures 3 and 5, the terminal box receiving portion 6 has, in the vicinity of the opening 7, two parallel walls 9, 10 of which upper edges have snap-fit beveled shoulder 11, 12.

As best seen in Figures 4 to 6, the engaging portion 22 of the body part 21 of the terminal box 2 has, internally and parallel to the sides of the peripheric wall 24, two pendant tabs 25, 26, lower edges of which comprise snap-fit beveled shoulder 27, 28.

Thus, for the attachment of the terminal box 2 to the terminal box receiving portion 6 of the shell, the box is vertically approached from the shell (perpendicular to the machine shaft), so that the pendant tabs 25, 26 are externally arranged to the parallel walls 9,10 of the terminal box receiving portion 6, and the snap-fit beveled shoulders 27, 28 of the tabs 25, 26 cooperate with the snap-fit beveled shoulders 11, 12 of the parallel walls 9, 10, making a snap-fit connection.

The terminal box receiving portion 6 further comprises at least one ground positioning cavity 13 configured to receive a grounding screw 38. In the embodiment of the invention shown in the figures, the terminal box receiving portion 6 comprises three grounding positioning cavities 13, 14 and 15. One cavity is central cavity 15 and the other cavities 13 and 14 are each adjacent to a respective one of the parallel walls 9,10. The cavities 13, 14 and 15 may be formed by wall portions formed in the terminal box receiving portion 6.

The engaging portion 22 of the body part 21 of the terminal 2 comprises at least one eyelet 29, in a position corresponding to the grounding positioning cavity 13. In the embodiment of the invention shown in the figures, the engaging portion 22 of the body portion 21 of the terminal box 2 comprises three eyelets 29, 30 and 37, each of them being in a position corresponding to a respective grounding positioning cavity 13, 14 and 15.

The peripheral wall 24 of the engaging portion 22 of the body portion 21 of the terminal box 2 comprises a stepped edge 31 which cooperates with the edge 32 of the inclined base 8 of the terminal box receiving portion 6.

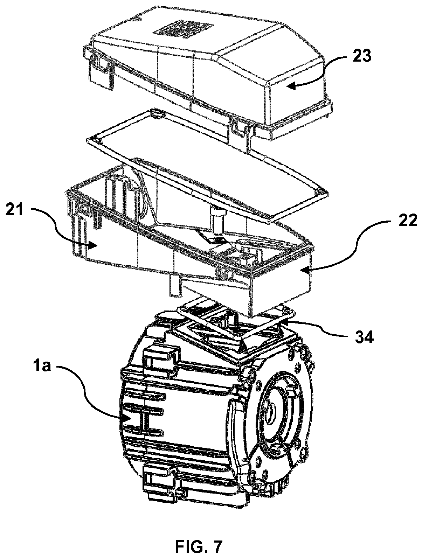

The cooperation between the stepped edge 31 of the peripheral wall 24 and the edge 32 of the inclined base generates a shell 33, which allows the accommodation of a joint gasket 34 (see Figure 7). The gasket 34 is used when a higher protection level is desired for the rotating electric machine.

As best seen in figure 3, the inclined base 8 of the terminal box receiving portion 6 further comprise a recess 35 located adjacent to one of the parallel walls 10 of the terminal box receiving portion 6, which may be used to facilitate disengagement of the snap-fit connection between the terminal box receiving portion 6 and the terminal box 2. In the embodiment of the invention shown in the figures, the inclined base 8 of the terminal box receiving portion 6 comprises two recesses 35, 36, each adjacent to a respective parallel wall 9, 10 of the terminal box receiving portion 6.

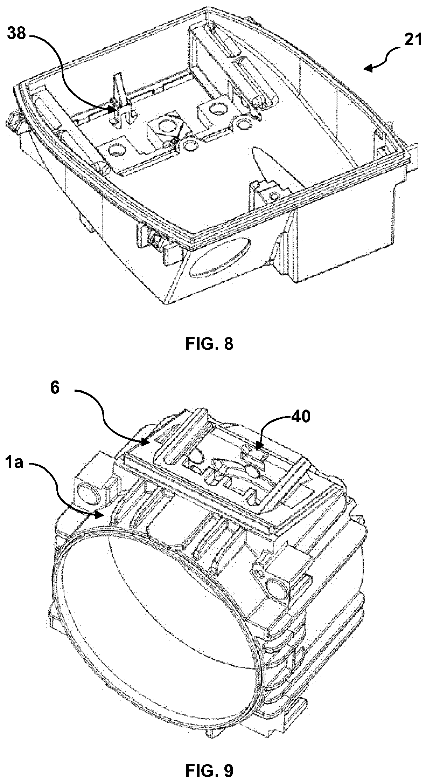

As best seen in figures 8 to 19, the peripheric wall 24 of the engaging portion 22 of the terminal box 2 may have a snap-fit latch member that engages a corresponding snap-fit latch member 40 of the terminal box receiving portion (6).

Having described examples of embodiments of the present invention, it should be understood that the scope of the present invention encompasses other possible variations of the inventive concept described, being limited solely by the wording of the appended claims, including the possible equivalents.

## Claims

1. A rotating electric machine of the type comprising a shell housing, an active core with a rotor and a stator, and a terminal box (2), the shell housing shell having a terminal box receiving portion (6) for receiving a terminal box (2), wherein:
the terminal box receiving portion (6) comprises an opening (7) and, in the vicinity of the opening (7), two parallel spaced walls (9, 10) of which the upper edges have snap-fit beveled shoulders (11, 12);
the terminal box (2) has an engaging portion (22) with a peripheric wall (24) and two spaced pendant tabs (25, 26), parallel and internal to the laterals of the peripheric wall (24), lower edges of the two spaced pendant tabs (25, 26) having snap-fit beveled shoulders (27, 28);
the attachment of the terminal box (2) to the terminal box receiving portion (6) is made by means of a snap fit between the snap-fit beveled shoulders (27, 28) of the spaced pendent tabs (25, 26) of the engaging portion (22) of the terminal box (2) with the snap-fit beveled shoulders (11, 12) of the spaced walls (9, 10) of the terminal box receiving portion (6), so that the two spaced pendant tabs (25, 26) are externally arranged to the parallel walls (9,10) of the terminal box receiving portion (6) when the snap-fit beveled shoulders (27, 28) of the two spaced pendant tabs (25, 26) cooperate with the snap-fit beveled shoulders (11, 12) of the parallel walls (9, 10);
the terminal box receiving portion (6) has an inclined base (8) and the sides of the peripheric wall (24) of the engaging portion (22) of the terminal box (2) are inclined, so that the profile of the perimetric wall (24) complements the profile of the inclined base (8) of the terminal box receiving portion (6);
the peripheric wall (24) of the engaging portion (22) of the terminal box (2) comprises a stepped edge (31) which cooperates with an edge (32) of the inclined base (8) of the terminal box receiving portion (6); and
the cooperation between the stepped edge (31) of the peripheral wall (24) and the edge (32) of the inclined base (8) generates a shell (33) to accommodate a gasket (34).

2. Electric machine according to claim 1, wherein the terminal box receiving portion (6) further comprises at least one grounding positioning cavity (13) configured to receive a grounding screw (38), and the engaging portion (22) of the terminal box (2) comprises at least one eyelet (29), arranged in a position corresponding to the positioning cavity (13), for the passage of the grounding (38).

3. Electric machine according to claim 2, wherein the terminal box receiving portion (6) comprises three grounding positioning cavities (13, 14, 15), one cavity being a central cavity (15) and the others cavities (13, 14) are each adjacent to a respective one of the parallel walls (9,10), the engaging portion (22) of the body portion (21) of the terminal box (2) comprises three eyelets (29, 30, 37) each of the eyelets (29, 30, 37) is arranged in a position corresponding to a respective grounding positioning cavity (13, 14,15).

4. Electric machine according to claim 3, wherein the grounding positioning cavities (13, 14, 15) are formed by wall portions formed in the terminal box receiving portion (6).

5. Electric machine according to any one of claims 1 to 4, wherein the inclined base (8) of the terminal box receiving portion (6) further comprises a recess (35) disposed adjacent to one of the spaced walls (10) of the terminal box receiving portion (6).

6. Electric machine according to claim 5, wherein the inclined base (8) of the terminal box receiving portion (6) comprises two recesses (35, 36), each of the recesses being located adjacent to a respective one of the spaced walls (9, 10) of the terminal box receiving portion (6).

7. Electric machine according to any one of claims 1 to 6, wherein the peripheric wall (24) of the engaging portion (22) of the terminal box (2) has a snap-fit latch member that engages a corresponding snap-fit latch member (40) of the terminal box receiving portion (6).

## Patentansprüche

1. Elektrische Drehmaschine des Typs, der ein Hüllengehäuse, einen aktiven Kern, der einen Rotor und einen Stator und einen Anschlusskasten aufweist, wobei das Hüllengehäuse einen Anschlusskastenaufnahmeteil (6) zum Aufnehmen eines Anschlusskastens (2) darin hat, wobei
der Anschlusskastenaufnahmeteil (6) eine Öffnung (7) und in der Nähe der Öffnung (7) zwei parallele beabstandete Wände (9, 10) aufweist, deren obere Kanten einschnappende abgeschrägte Schultern (11, 12) haben;
wobei der Anschlusskasten (2) einen Eingriffsteil (22) mit einer Umfangswand (24) und zwei beabstandeten herunterhängenden Laschen (25, 26) parallel und innerhalb der Seitenwände der Umfangswand (24) hat, wobei die unteren Kanten der zwei beabstandeten herabhängenden Laschen (25, 26) einschnappende abgeschrägte Schultern (27, 28) haben;
wobei die Befestigung des Anschlusskastens (2) an dem Anschlusskastenaufnahmeteil (6) mittels einer Einschnapppassung zwischen den einschnappenden abgeschrägten Schultern (27, 28) der beabstandeten herunterhängenden Laschen (25, 26) des Eingriffsteils (22) des Anschlusskastens (2) mit den einschnappenden abgeschrägten Schultern (11, 12) der beabstandeten Wände (9, 10) des Anschlusskastenaufnahmeteils (6) vorgenommen wird, so dass die zwei beabstandeten herunterhängenden Laschen (25, 26) außen an den parallelen Wänden (9, 10) des Anschlusskastenaufnahmeteils (6) angeordnet sind, wenn die einschnappenden abgeschrägten Schultern (27, 28) der zwei beabstandeten herunterhängenden Laschen (25, 26) mit den einschnappenden abgeschrägten Schultern (11, 12) der parallelen Wände (9, 10) zusammenarbeiten;
wobei der Anschlusskastenaufnahmeteil (6) eine geneigte Basis (8) hat, und wobei die Seiten der Umfangswand (24) des Eingriffsteils (22) des Anschlusskastens (2) geneigt sind, so dass das Profil der Umfangswand (24) das Profil der geneigten Basis (8) des Anschlusskastenaufnahmeteils (6) vervollständigt;
wobei die Umfangswand (24) des Eingriffsteils (22) des Anschlusskastens (2) eine gestufte Kante (31) aufweist, die mit einer Kante (32) der geneigten Basis (8) des Anschlusskastenaufnahmeteils (6) zusammenarbeitet; und
wobei die Zusammenarbeit zwischen der gestuften Kante (31) der Umfangswand (24) und der Kante (32) der geneigten Basis (8) eine Umhüllung (33) zur Aufnahme einer Dichtung (34) erzeugt.

2. Elektrische Maschine nach Anspruch 1, wobei der Anschlusskastenaufnahmeteil (6) weiter mindestens einen Erdungspositionierungshohlraum (13) aufweist, der konfiguriert ist, um eine Erdungsschraube (38) aufzunehmen, und wobei der Eingriffsteil (22) des Anschlusskastens (2) zumindest eine Öse (29), die an einer Position entsprechend dem Positionierungshohlraum (13) angeordnet ist, zum Durchleiten der Erdung (38) aufweist.

3. Elektrische Maschine nach Anspruch 2, wobei der Anschlusskastenaufnahmeteil (6) drei Erdungspositionierungshohlräume (13, 14, 15) aufweist, wobei ein Hohlraum ein mittiger Hohlraum (15) ist, und wobei die anderen Hohlräume (13, 14) jeweils benachbart zu jeweils einer der parallelen Wände (9, 10) sind, wobei der Eingriffsteil (22) des Körperteils (21) des Anschlusskastens (2) drei Ösen (29, 30, 37) aufweist, wobei jede der Ösen (29, 30, 37) an einer Position entsprechend einem jeweiligen Erdungspositionierungshohlraum (13, 14, 15) angeordnet ist.

4. Elektrische Maschine nach Anspruch 3, wobei die Erdungspositionierungshohlräume (13, 14, 15) durch Wandteile geformt sind, die in dem Anschlusskastenaufnahmeteil (6) geformt sind.

5. Elektrische Maschine nach einem der Ansprüche 1 bis 4, wobei die geneigte Basis (8) des Anschlusskastenaufnahmeteils (6) weiter eine Vertiefung (35) aufweist, die benachbart zu einer der beabstandeten Wände (10) des Anschlusskastenaufnahmeteils (6) angeordnet ist.

6. Elektrische Maschine nach Anspruch 5, wobei die geneigte Basis (8) des Anschlusskastenaufnahmeteils (6) zwei Vertiefungen (35, 36) aufweist, wobei jede der Vertiefungen benachbart zu einer jeweiligen Einen der beabstandeten Wände (9, 10) des Anschlusskastenaufnahmeteils (6) angeordnet ist.

7. Elektrische Maschine nach einem der Ansprüche 1 bis 6, wobei die Umfangswand (24) des Eingriffsteils (22) des Anschlusskastens (2) ein einschnappendes Riegelelement hat, welches mit einem entsprechenden einschnappenden Riegelelement (40) des Anschlusskastenaufnahmeteils (6) in Eingriff kommt.

## Revendications

1. Machine électrique à rotation du type comprenant un boîtier de coque, un noyau actif avec un rotor et un stator et une boîte de connexion (2), le boîtier de coque ayant une partie de réception de la boîte de connexion (6) destinée à recevoir une boîte de connexion (2), dans laquelle :
la partie de réception de la boîte de connexion (6) comprend une ouverture (7) et, au voisinage de l'ouverture (7), deux parois espacées parallèles (9, 10) dont les bords supérieurs ont des épaulements biseautés à encliquetage (11, 12) ;
la boîte de connexion (2) a une partie d'engagement (22) avec une paroi périphérique (24) et deux pattes pendantes espacées (25, 26), parallèles et internes aux bords latéraux de la paroi périphérique (24), des bords inférieurs des deux pattes pendantes espacées (25, 26) ayant des épaulements biseautés à encliquetage (27 , 28) ;
la fixation de la boîte de connexion (2) à la partie de réception de la boîte de connexion (6) est réalisée au moyen d'un encliquetage entre les épaulements biseautés à encliquetage (27, 28) des languettes pendantes espacées (25, 26) de la partie d'engagement (22) de la boîte de connexion (2) avec les épaulements biseautés à encliquetage (11, 12) des parois espacées (9, 10) de la partie de réception de la boîte de connexion (6), de sorte que les deux pattes pendantes espacées (25, 26) soient agencées à l'extérieur par rapport aux parois parallèles (9, 10) de la partie de réception de la boîte de connexion (6) lorsque les épaulements biseautés à encliquetage (27, 28) des deux languettes pendantes espacées (25, 26) coopèrent avec les épaulements biseautés à encliquetage (11, 12) des parois parallèles (9, 10) ;
la partie de réception de la boîte de connexion (6) a une base inclinée (8) et les côtés de la paroi périphérique (24) de la partie d'engagement (22) du boîtier de connexion (2) sont inclinés, de sorte que le profil de la paroi périmétrique (24) soit complémentaire du profil de la base inclinée (8) de la partie de réception de la boîte de connexion (6) ;
la paroi périphérique (24) de la partie d'engagement (22) de la boîte de connexion (2) comprend un bord étagé (31) qui coopère avec un bord (32) de la base inclinée (8) de la partie de réception de la boîte de connexion (6) ; et
la coopération entre le bord étagé (31) de la paroi périphérique (24) et le bord (32) de la base inclinée (8) génère une coque (33) pour accueillir un joint (34).

2. Machine électrique selon la revendication 1, dans laquelle la partie de réception de la boîte de connexion (6) comprend en outre au moins une cavité de positionnement de mise à la terre (13) configurée pour recevoir une vis de mise à la terre (38), et la partie d'engagement (22) de la boîte de connexion (2) comprend au moins un œillet (29), agencé dans une position correspondant à la cavité de positionnement (13), pour le passage de la mise à la terre (38).

3. Machine électrique selon la revendication 2, dans laquelle la partie de réception de la boîte de connexion (6) comprend trois cavités de positionnement de mise à la terre (13, 14, 15), une cavité étant une cavité centrale (15) et les autres cavités (13, 14) étant chacune adjacente à l'une respective des parois parallèles (9, 10), la partie d'engagement (22) de la partie de corps (21) de la boîte de connexion (2) comprend trois œillets (29, 30, 37), chacun des œillets (29, 30, 37) étant agencé à une position correspondant à une cavité de positionnement de mise à la terre respective (13, 14, 15).

4. Machine électrique selon la revendication 3, dans laquelle les cavités de positionnement de mise à la terre (13, 14, 15) sont formées par des parties de paroi formées dans la partie de réception de la boîte de connexion (6).

5. Machine électrique selon l'une quelconque des revendications 1 à 4, dans laquelle la base inclinée (8) de la partie de réception de la boîte de connexion (6) comprend en outre un évidement (35) disposé adjacent à l'une des parois espacées (10) de la partie de réception de la boîte de connexion (6).

6. Machine électrique selon la revendication 5, dans laquelle la base inclinée (8) de la partie de réception de la boîte de connexion (6) comprend deux évidements (35, 36), chacun des évidements étant situé adjacent à l'une respective des parois espacées (9, 10) de la partie de réception de la boîte de connexion (6) .

7. Machine électrique selon l'une quelconque des revendications 1 à 6, dans laquelle la paroi périphérique (24) de la partie d'engagement (22) de la boîte de connexion (2) a un élément de verrouillage à encliquetage qui s'engage avec un élément de verrouillage à encliquetage correspondant (40) de la partie de réception de la boîte de connexion (6).
